# FASCICULE DE BREVET EUROPEEN

(11) **EP 4 048 897 B1**
(45) Date de publication et mention de la délivrance du brevet: **29.11.2023**
(21) Numéro de dépôt: 20803218.5
(22) Date de dépôt: 16.10.2020
(51) Int. Cl.: F04C 2/10, F02C 7/32, F04C 7/00, F04C 15/00

(54) **TURBOMACHINE MUNIE D'UNE POMPE ELECTROMAGNETIQUE A FLUX MAGNETIQUE AXIAL**
TURBOMASCHINE MIT EINER ELEKTROMAGNETISCHEN PUMPE MIT AXIALEM MAGNETISCHEM FLUSS
TURBOMACHINE PROVIDED WITH AN ELECTROMAGNETIC PUMP WITH AXIAL MAGNETIC FLUX

(30) Priorité: 25.10.2019 FR 1911967
(43) Date de publication de la demande: 31.08.2022
(73) Titulaire: Safran Helicopter Engines, 64510 Bordes (FR)
(72) Inventeur: DUPEU, Franck, Albert, Robert, 77550 MOISSY-CRAMAYEL (FR); GIGON, Jean-Marie, André, Robert, 77550 MOISSY-CRAMAYEL (FR); MINGRET, Pascal, Jean-Dominique, 77550 MOISSY-CRAMAYEL (FR)
(74) Mandataire: Cabinet Beau de Loménie
(86) Numéro de dépôt international: PCT/FR2020/051855
(87) Numéro de publication internationale: WO 2021/079048

(56) Documents cités:
- DE-A1-102017 222 754
- US-A- 5 269 663
- US-A1- 2010 003 148
- US-A1- 2010 047 088
- US-A1- 2018 128 268

## Description

### Domaine Technique

La présente invention concerne le domaine des turbomachines du type comprenant un corps rotatif comprenant un arbre moteur délivrant une puissance mécanique. L'invention s'applique à tout type de turbomachines, en particulier celles utilisées dans les aéronefs comme les turboréacteurs, turbopropulseurs, et turbomachines à soufflantes non carénées, aussi connues sous le vocable anglo-saxon de « Open Rotor ».

### Technique antérieure

Une turbomachine conventionnelle comporte de manière connue un ou plusieurs corps rotatifs. Chaque corps rotatif comprend un compresseur, une turbine et un arbre moteur reliant la turbine au compresseur pour entraîner le compresseur en rotation. Une partie de la puissance générée par la turbomachine est utilisée pour entraîner différents accessoires (ou machines auxiliaires), nécessaires au fonctionnement du turboréacteur ou de l'aéronef, tels que par exemple une pompe de lubrification ou une pompe à carburant.

A cet effet, la turbomachine comprend généralement une boîte d'engrenage d'accessoire (Accessory Gear Box) reliant l'arbre moteur aux pompes. Lorsque l'arbre moteur est entraîné en rotation, la boîte d'engrenage d'accessoires transmet le mouvement de rotation aux différents accessoires. En d'autres termes, l'énergie mécanique produite par l'arbre moteur est transmise aux pompes par la boîte d'engrenage d'accessoires.

Cette solution technique présente toutefois les inconvénients suivants :
- une partie de la puissance mécanique délivrée par le corps rotatif est prélevée pour entraîner la ou les pompes,
- la vitesse de rotation de la ou des pompes est dépendante de la vitesse de rotation de l'arbre moteur, la ou les pompes ne pouvant alors pas être pilotées selon un régime moteur indépendant,
- la liaison mécanique entre l'arbre moteur et la ou les pompes nécessite des étanchéités dynamiques qui sont difficiles à réaliser,
- la liaison mécanique entre l'arbre moteur et la ou les pompes requière de placer la ou les pompes au voisinage de la boîte d'engrenage d'accessoires, ce qui limite grandement les possibilités d'implantation de la ou des pompes dans une turbomachine.

Le document US 2010/0003148 A1 divulgue une turbomachine comprenant une pompe à carburant entraînée par un moteur électrique et en secours, par une turbine à air.

### Exposé de l'invention

L'invention a notamment pour but de fournir une turbomachine ne présentant pas les inconvénients précités.

Ce but est atteint grâce à une turbomachine comprenant un corps rotatif comprenant un arbre moteur délivrant une puissance mécanique, caractérisée en ce qu'elle comprend au moins une pompe électromagnétique découplée mécaniquement de l'arbre moteur, chaque pompe électromagnétique comprenant au moins un stator délimitant un volume interne annulaire dans lequel est présent un rotor apte à entraîner un fluide, une pluralité d'aimants répartis de manière annulaire sur le rotor et au moins une pluralité de bobines réparties de manière annulaire à l'intérieur du stator, les bobines de la pluralité de bobines étant en vis-à-vis des aimants suivant une direction axiale.

La turbomachine selon l'invention est ainsi équipée d'une ou plusieurs pompes qui sont découplées mécaniquement de l'arbre moteur et qui sont pilotées indépendamment du régime moteur. Il est ainsi possible d'avoir une plus grande liberté sur le choix de la vitesse de rotation de la pompe et sur les possibilités d'implantation de la ou les pompes dans la turbomachine.

En outre, en plaçant la pluralité d'aimants permanents et la pluralité de bobines en vis-à-vis suivant la direction axiale, on optimise grandement l'encombrement radial de la pompe. On obtient ainsi une pompe très compacte.

Selon une caractéristique particulière de la turbomachine de l'invention, le rotor comprend une roue munie d'une pluralité d'aubes, les aimants de la pluralité d'aimants étant maintenus au niveau de la périphérie externe de la roue.

Selon une autre caractéristique particulière de la turbomachine de l'invention, chaque pompe électromagnétique comprend des première et deuxième pluralités de bobines présentes respectivement d'un côté et de l'autre côté de la roue, les bobines des première et deuxième pluralités de bobines étant en vis-à-vis des aimants suivant la direction axiale. Deux pluralités de bobines permettent d'assurer une redondance en cas de panne ou de défaillance d'une pluralité de bobine. La redondance de la pluralité de bobine peut également être utilisée pour doubler la puissance des champs électromagnétiques auxquels sont soumis les aimants permanents.

Selon une autre caractéristique particulière de la turbomachine de l'invention, le rotor comprend un pignon intérieur coopérant avec une couronne extérieure à denture intérieure, les aimants de la pluralité d'aimants étant maintenus au niveau de la périphérie externe de la couronne extérieure.

Selon une autre caractéristique particulière de la turbomachine de l'invention, chaque pompe électromagnétique comprend des première et deuxième pluralités de bobines présentes respectivement d'un côté et de l'autre côté de la couronne extérieure, les bobines des première et deuxième pluralités de bobines étant en vis-à-vis des aimants suivant la direction axiale. L'utilisation de deux pluralités de bobines permet d'assurer une redondance en cas de panne ou de défaillance d'une pluralité de bobine et/ou de doubler la puissance des champs électromagnétiques auxquels sont soumis les aimants permanents.

Selon une autre caractéristique particulière de la turbomachine de l'invention, le rotor comprend un pignon intérieur coopérant avec une couronne extérieure à denture intérieure, les aimants de la pluralité d'aimants étant maintenus sur le pignon intérieur.

Selon une autre caractéristique particulière de la turbomachine de l'invention, chaque pompe électromagnétique comprend des première et deuxième pluralités de bobines présentes respectivement d'un côté et de l'autre côté du pignon, les bobines des première et deuxième pluralités de bobines étant en vis-à-vis des aimants suivant la direction axiale. L'utilisation de deux pluralités de bobines permet d'assurer une redondance en cas de panne ou de défaillance d'une pluralité de bobine et/ou de doubler la puissance des champs électromagnétiques auxquels sont soumis les aimants permanents.

Selon une autre caractéristique particulière de la turbomachine de l'invention, les aimants de la pluralité d'aimant sont disposés de manière annulaire selon une structure de Halbach. Cette disposition particulière permet d'augmenter le champ magnétique du côté externe du rotor tandis que le champ magnétique du côté interne du rotor est sensiblement annulé. On réduit ainsi la déperdition du champ magnétique, ce qui améliore le pilotage du rotor par les bobines.

L'invention a encore pour objet un aéronef comprenant au moins un turbopropulseur ou un turboréacteur comprenant une turbomachine selon l'invention.

### Brève description des dessins

[Fig. 1] La figure 1 est une vue schématique en perspective éclatée d'une pompe électromagnétique conformément à un premier mode de réalisation de l'invention,
[Fig.2] La figure 2 est une autre vue schématique en perspective éclatée d'une pompe électromagnétique conformément au premier mode de réalisation de l'invention,
[Fig. 3] La figure 3 est une vue schématique en perspective éclatée d'une pompe électromagnétique conformément à un deuxième mode de réalisation de l'invention,
[Fig.4] La figure 4 est une autre vue schématique en perspective éclatée d'une pompe électromagnétique conformément au deuxième mode de réalisation de l'invention,
[Fig. 5] La figure 5 est une vue schématique en perspective éclatée d'une pompe électromagnétique conformément à un troisième mode de réalisation de l'invention,
[Fig.6] La figure 6 est une autre vue schématique en perspective éclatée d'une pompe électromagnétique conformément au troisième mode de réalisation de l'invention,
[Fig. 7] La figure 7 est une vue schématique en perspective éclatée d'une pompe électromagnétique conformément à un quatrième mode de réalisation de l'invention,
[Fig.8] La figure 8 est une autre vue schématique en perspective éclatée d'une pompe électromagnétique conformément au quatrième mode de réalisation de l'invention,
[Fig. 9] La figure 7 est une vue schématique en perspective éclatée d'une pompe électromagnétique conformément à un cinquième mode de réalisation de l'invention,
[Fig.10] La figure 8 est une autre vue schématique en perspective éclatée d'une pompe électromagnétique conformément au cinquième mode de réalisation de l'invention,
[Fig.11] La figure 11 représente une disposition annulaire d'aimants permanents suivant une structure d'Halbach,
[Fig.12] La figure 12 est une représentation schématique d'une turbomachine selon l'invention.

### Description des modes de réalisation

L'invention s'applique d'une manière générale à toute turbomachine équipée d'au moins une pompe pilotée indépendamment du régime moteur de la turbomachine. Elle s'applique notamment, mais pas exclusivement, aux pompes du type à anneau liquide, à canal latéral ou régénérative et gérotor.

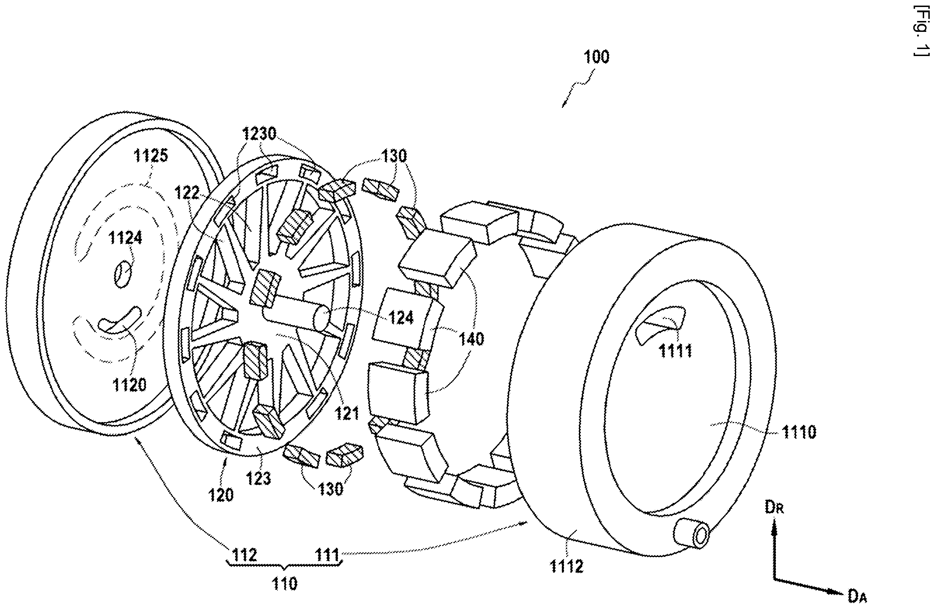

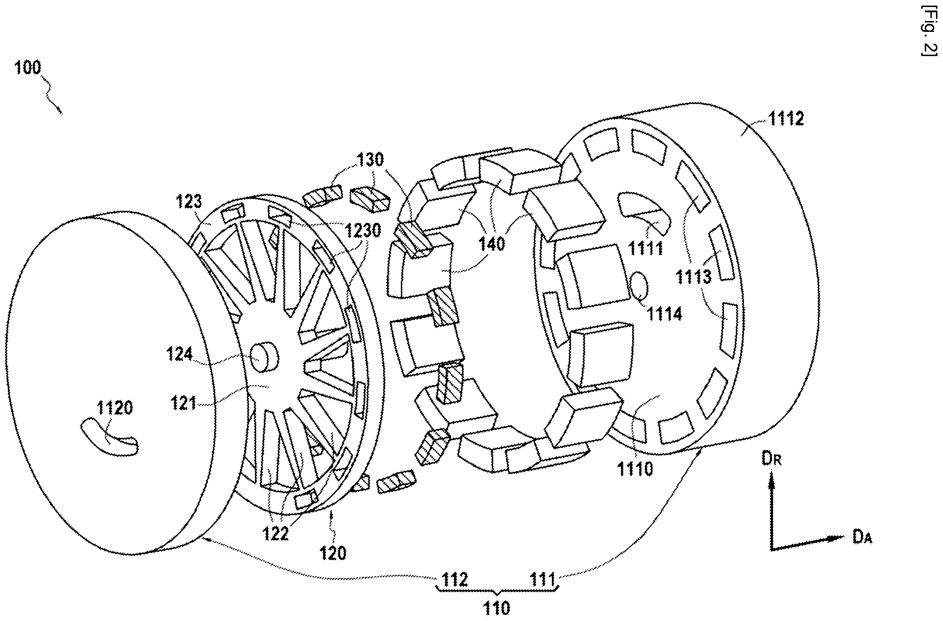

Les figures 1 et 2 illustrent une pompe électromagnétique 100 conformément à un mode de réalisation de l'invention. Dans l'exemple décrit ici, la pompe électromagnétique 100 est une pompe du type à anneau liquide comprenant un corps de pompe fixe ou stator 110 constitué d'un carter 111 et d'un flasque 112. Le carter 111 comporte une partie centrale cylindrique pleine 1110 munie d'un port d'aspiration/refoulement 1111 et une paroi externe circulaire 1112 s'étendant concentriquement autour de la partie centrale 1110, des logements annulaires 1113 étant délimités entre la partie centrale 1110 et la paroi externe 1112. Le flasque 112 comporte un port de refoulement/aspiration 1120.

La pompe électromagnétique 100 comprend également une roue à aubes ou rotor 120 comprenant une roue 121 muni d'une pluralité d'aubes 122 s'étendant depuis la roue suivant une direction radiale D_{R}, un anneau 123 étant présent au niveau de la périphérie externe de la roue. Dans l'exemple décrit ici, l'anneau 123 est fixé sur les extrémités radialement externes des aubes 122. La roue à aubes 120 comporte un arbre de rotation 124 destiné à être supporté par des paliers 1114 et 1124 présents respectivement sur le carter 111 et le flasque 112. De manière connue dans les pompes de type à anneau liquide, l'arbre est placé de façon excentrique sur la roue à aube 120, par exemple au moyen d'une entretoise (non représentée sur les figures 1 et 2) de manière à créer des variations de volume inter-aubes (ou inter-pales) qui permettent d'aspirer le fluide pompé, par exemple par le port 1111 puis de l'évacuer sous pression, par exemple par le port 1120. La pompe 100 peut être également une pompe à canal latéral, encore appelée pompe régénérative. Dans ce cas et de façon connue, un canal latéral 1125 (en pointillés sur la figure 1) présent ici sur le flasque 112 s'étend entre les ports 1111 et 1120. L'évolution des variations de volume inter-aubes (ou inter-pales), associée au champ de vitesse (vortex) présent dans le canal latéral 1125, permet d'aspirer le fluide, par exemple par le port 1111, puis de l'évacuer sous pression, par exemple par le port 1120. La pompe électromagnétique 100 comprend encore une pluralité d'aimants permanents 130 répartis de manière annulaire sur la roue à aube ou rotor 120 et une pluralité de bobines 140 réparties de manière annulaire à l'intérieur du corps de pompe fixe ou stator 110. Plus précisément, dans l'exemple décrit ici, les aimants permanents 130 sont maintenus dans des logements 1230 présents dans l'anneau 123 tandis que les bobines 140 sont maintenues dans le logement annulaire 1113 présents dans le carter 111.

Une fois tous les éléments constitutifs de la pompe 100 assemblés, les bobines 140 se trouvent en vis-à-vis des aimants permanents 130 suivant une direction axiale D_{A}. De façon connue, le pilotage de la pompe électromagnétique 100 (couple et vitesse de rotation) est réalisé par contrôle du courant circulant dans les bobines.

En fixant les aimants permanents directement 130 sur la roue à aube 120, on intègre une partie des moyens d'entraînement de la pompe directement au sein des éléments en mouvement, ce qui permet d'obtenir un haut niveau d'intégration des moyens d'entraînement et donc un encombrement réduit pour la pompe.

En outre, en plaçant la pluralité d'aimants permanents et la pluralité de bobines en vis-à-vis suivant la direction axiale, on optimise grandement l'encombrement radial de la pompe. On obtient ainsi une pompe très compacte qui peut être pilotée de manière indépendante par rapport au régime moteur de la turbomachine avec laquelle elle est associée.

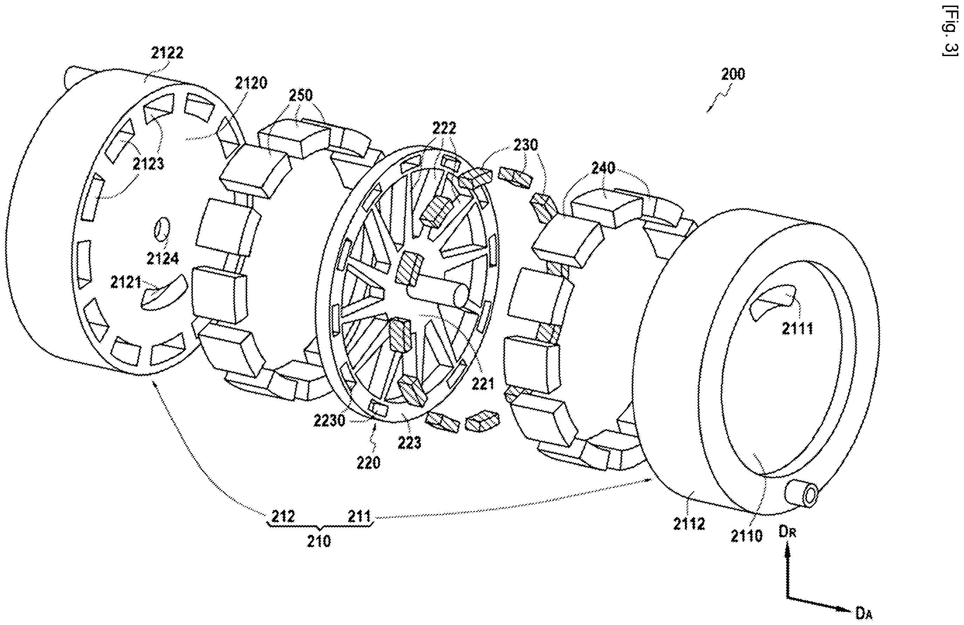

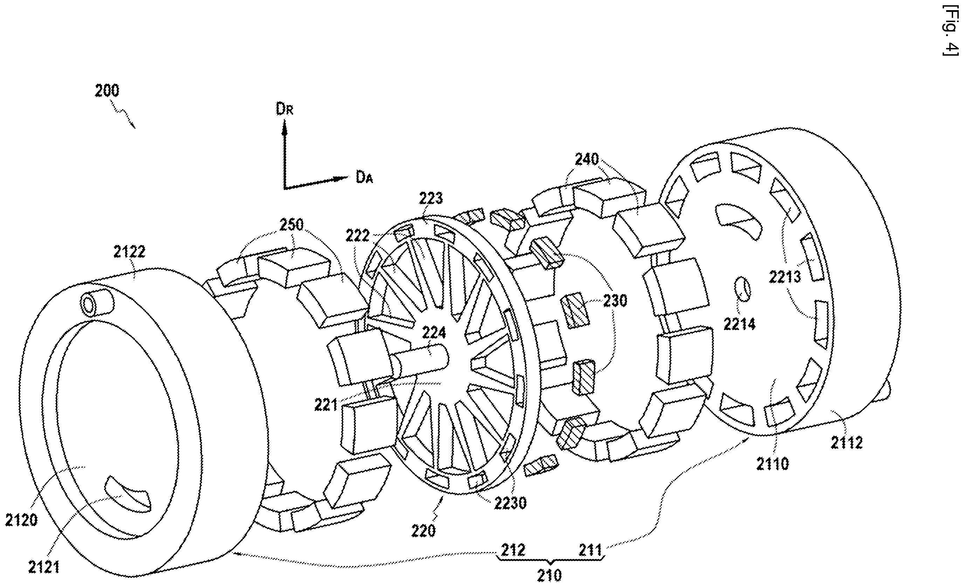

Les figures 3 et 4 illustrent un autre mode de réalisation d'une pompe électromagnétique 200 qui diffère de la pompe électromagnétique 100 décrite en relation avec les figures 1 et 2 en ce qu'elle comprend un double bobinage. Plus précisément, comme pour la pompe 100, la pompe 200 comprend une roue à aubes ou rotor 220 comprenant une roue 221 muni d'une pluralité d'aubes 222 s'étendant depuis la roue suivant une direction radiale D_{R}, un anneau 223 fixé sur les extrémités radialement externes des aubes 222.

La pompe électromagnétique 200 comprenant également un corps de pompe fixe ou stator 210 constitué d'un premier carter 211 et d'un deuxième carter 212. Les carters 211 et 212 comportent chacun respectivement une partie centrale cylindrique pleine 2110, 2120 munie d'un port d'aspiration/refoulement 2111, 2121 et une paroi externe circulaire 2112, 2122 s'étendant concentriquement autour de la partie centrale 2110, 2120. Des premiers logements annulaires 2113 sont délimités dans le premier carter 211 entre la partie centrale 2110 et la paroi externe 2112. Des deuxièmes logements annulaires 2123 sont délimités dans le deuxième carter 212 entre la partie centrale 2120 et la paroi externe 2122.

La pompe électromagnétique 200 comprend encore une pluralité d'aimants permanents 230 maintenus de manière annulaire dans des logements 2230 présents dans l'anneau 223 et des première et deuxième pluralités de bobines 240 et 250. La première pluralité de bobines 240 est répartie de manière annulaire dans les premiers logements annulaires 2113 tandis que la deuxième pluralité de bobines 250 est répartie de manière annulaire dans les deuxièmes logements annulaires 2123.

Une fois la pompe 200 assemblée, l'arbre de rotation 224 de la roue à aube 220 est supporté par des paliers 2214 et 2224 présents respectivement sur les premier et deuxième carters 211 et 212 tandis que les première et deuxième pluralités de bobines 240 et 250 sont présentes respectivement d'un côté et de l'autre côté de la roue 220 et en vis-à-vis des aimants suivant une direction axiale D_{A}.

En outre des avantages d'intégration et de compacité déjà énoncés ci-avant pour la pompe 100, la pompe électromagnétique 200 comprend deux pluralités de bobines qui permettent d'assurer une redondance en cas de panne ou de défaillance d'une pluralité de bobine, chaque pluralité de bobine ayant ses propres connexions au système de pilotage. La redondance de la pluralité de bobine peut également être utilisée pour doubler la puissance des champs électromagnétiques auxquels sont soumis les aimants permanents. On notera aussi que toujours dans un souci d'optimisation de l'encombrement de la pompe, seule la pluralité de bobine est redondée, et ce au plus près des aimants permanents.

La pompe 200 peut être également une pompe à canal latéral, encore appelée pompe régénérative comme expliqué précédemment en relation avec la pompe 100.

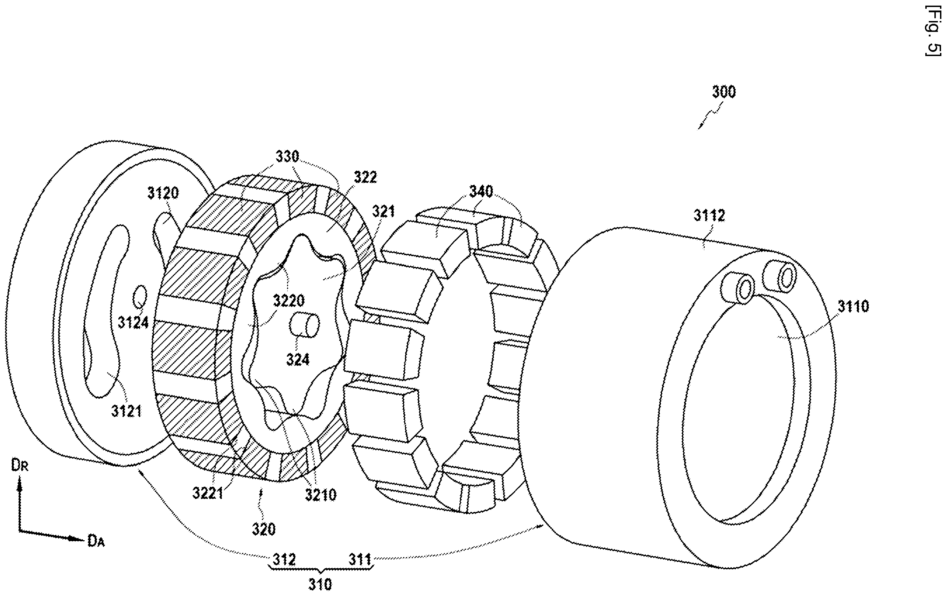

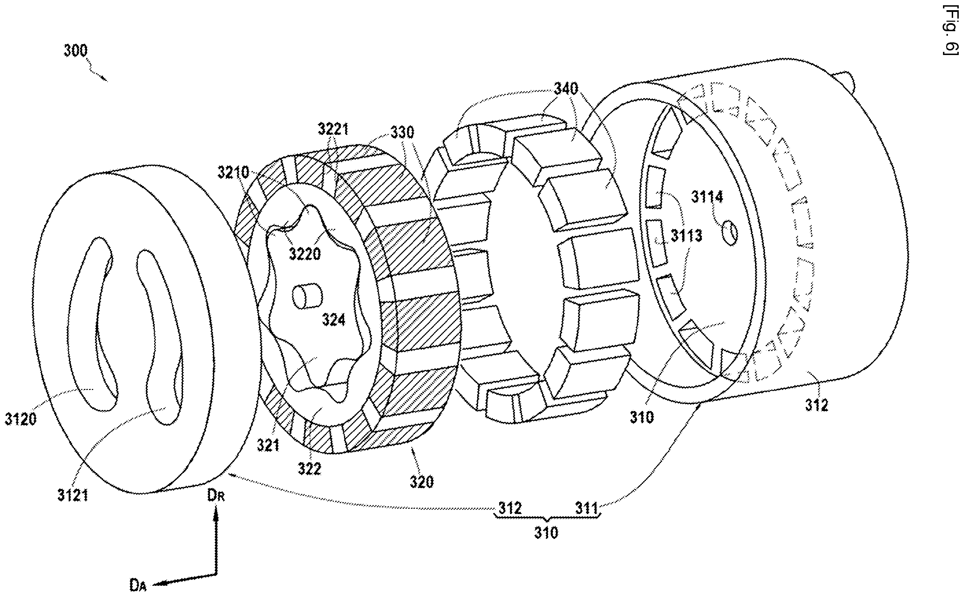

Les figures 5 et 6 montrent une pompe électromagnétique 300 conformément à un autre mode de réalisation de l'invention. Dans ce mode de réalisation, la pompe 300 est une pompe du type gérotor comprenant un corps de pompe fixe ou stator 310 constitué d'un carter 311 et d'un flasque 312. Le carter 311 comporte une partie centrale cylindrique pleine 3110 et une paroi externe circulaire 3112 s'étendant concentriquement autour de la partie centrale 3110, des logements annulaires 3113 étant délimités entre la partie centrale 3110 et la paroi externe 3112. Le flasque 312 comporte un port d'aspiration 3120 et un port de refoulement 3121.

La pompe électromagnétique 300 comprend également un rotor 320 comprenant un pignon intérieur 321 et une couronne extérieure 322 présente autour du pignon intérieur 321 suivant une direction radiale D_{R}. Le pignon intérieur comprend une denture extérieure constituée ici de six dents 3210 tandis que la couronne extérieure 322 comprend une denture interne constituée ici de 7 dents 3220. Le pignon intérieur 321 comporte un arbre de rotation 324 destiné à être supporté par des paliers 3114 et 3124 présents respectivement sur le carter 311 et le flasque 312. De manière connue dans les pompes de type gérotor, un fluide est aspiré depuis le port 3120 et refoulé via le port 3121 par des capsules crées entre les dents 3210 et 3220 respectivement du pignon intérieur 321 et de la couronne extérieure 322 lors de la rotation de ces deux éléments.

La pompe électromagnétique 300 comprend encore une pluralité d'aimants permanents 330 répartis de manière annulaire sur la périphérie externe de la couronne extérieure 322 et une pluralité de bobines 340 réparties de manière annulaire à l'intérieur du corps de pompe fixe ou stator 310. Plus précisément, dans l'exemple décrit ici, les aimants permanents 330 sont maintenus dans des logements 3221 présents dans la couronne extérieure 322 tandis que les bobines 340 sont maintenues dans les logements annulaires 3113 présents dans le carter 311.

Une fois tous les éléments constitutifs de la pompe 300 assemblés, les bobines 340 se trouvent en vis-à-vis des aimants permanents 330 suivant une direction axiale D_{A}. De façon connue, le pilotage de la pompe électromagnétique 300 (couple et vitesse de rotation) est réalisé par contrôle du courant circulant dans les bobines.

En fixant les aimants permanents directement 330 sur la couronne extérieure 322, on intègre une partie des moyens d'entraînement de la pompe directement au sein des éléments en mouvement, ce qui permet d'obtenir un haut niveau d'intégration des moyens d'entraînement et donc un encombrement réduit pour la pompe.

En outre, en plaçant la pluralité d'aimants permanents et la pluralité de bobines en vis-à-vis suivant la direction axiale, on optimise grandement l'encombrement radial de la pompe. On obtient ainsi une pompe très compacte qui peut être pilotée de manière indépendante par rapport au régime moteur de la turbomachine avec laquelle elle est associée.

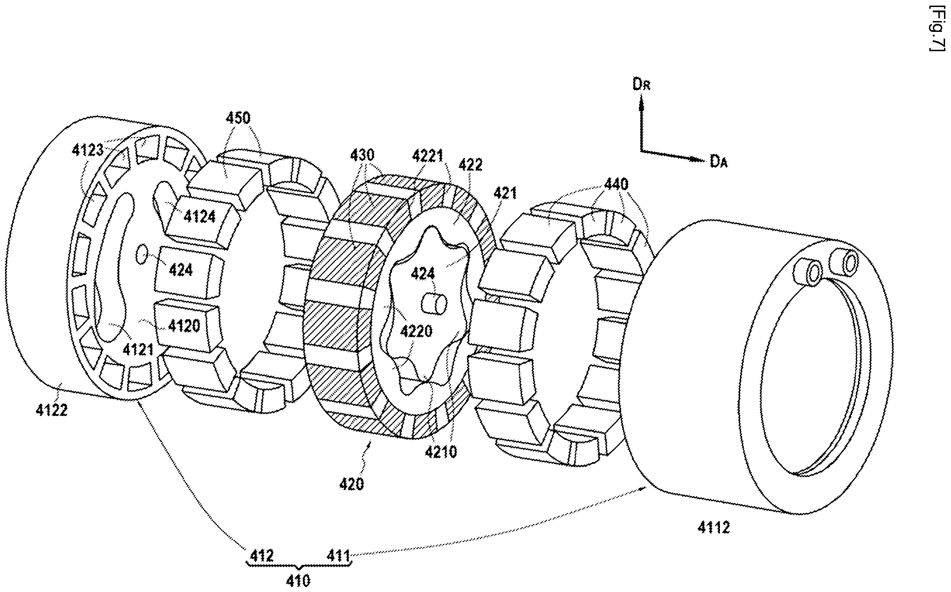

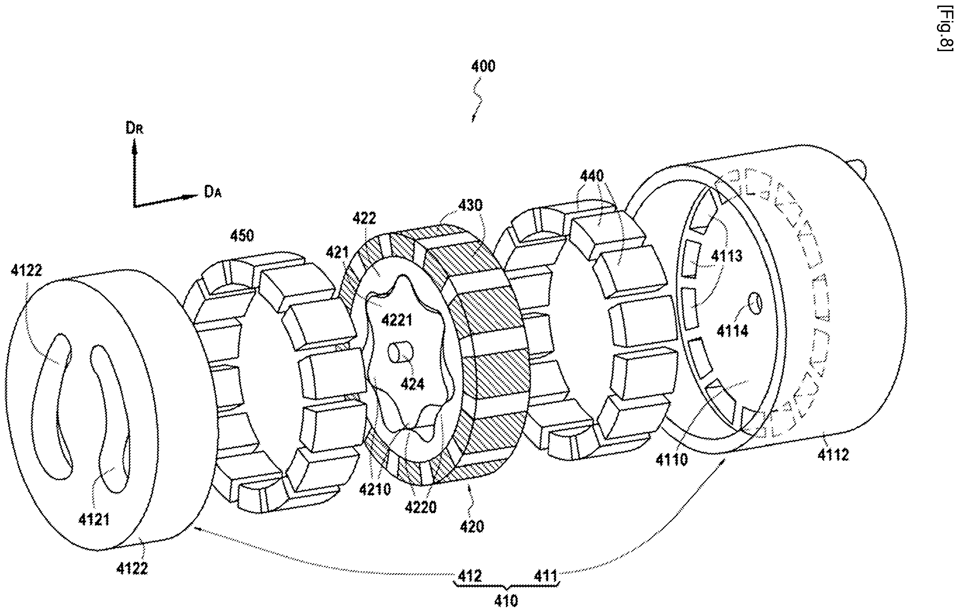

Les figures 7 et 8 illustrent un autre mode de réalisation d'une pompe électromagnétique 400 qui diffère de la pompe électromagnétique 300 décrite en relation avec les figures 5 et 6 en ce qu'elle comprend un double bobinage. Plus précisément, comme pour la pompe 300, la pompe 400 comprend un rotor 420 comprenant un pignon intérieur 421 ayant une denture extérieure constituée ici de six dents 4210 et une couronne extérieure 422 ayant une denture interne constituée ici de 7 dents 4220, la couronne extérieure 422 étant présente autour du pignon intérieur 421 suivant une direction radiale D_{R}. La pompe électromagnétique 400 comprend également un corps de pompe fixe ou stator 410 constitué d'un premier carter 411 et d'un deuxième carter 412. Les carters 411 et 412 comportent chacun respectivement une partie centrale cylindrique pleine 4110, 4120 et une paroi externe circulaire 4112, 4122 s'étendant concentriquement autour de la partie centrale 4110, 4120, la partie centrale 4120 du carter 412 comportant un port d'aspiration 4121 et un port de refoulement 4124. Des premiers logements annulaires 4113 sont délimités dans le premier carter 411 entre la partie centrale 4110 et la paroi externe 4112. Un deuxième logement annulaire 4123 est délimité dans le deuxième carter 412 entre la partie centrale 4120 et la paroi externe 4122.

La pompe électromagnétique 400 comprend encore une pluralité d'aimants permanents 430 maintenus de manière annulaire dans des logements 4221 présents dans la couronne extérieure 422 et des première et deuxième pluralités de bobines 440 et 450.

La première pluralité de bobines 440 est répartie de manière annulaire dans les premiers logements annulaires 4113 tandis que la deuxième pluralité de bobines 450 est répartie de manière annulaire dans les deuxièmes logements annulaires 4123.

Une fois la pompe 400 assemblée, l'arbre de rotation 424 du pignon interne 421 est supporté par des paliers 4114 et 4124 présents respectivement sur les premier et deuxième carters 411 et 412 tandis que les première et deuxième pluralités de bobines 440 et 450 sont présentes respectivement d'un côté et de l'autre côté de la couronne extérieure 422 et en vis-à-vis des aimants suivant une direction axiale D_{A}.

En outre des avantages d'intégration et de compacité déjà énoncés ci-avant pour la pompe 300, la pompe électromagnétique 400 comprend deux pluralités de bobines qui permettent d'assurer une redondance en cas de panne ou de défaillance d'une pluralité de bobine, chaque pluralité de bobine ayant ses propres connexions au système de pilotage. La redondance de la pluralité de bobine peut également être utilisée pour doubler la puissance des champs électromagnétiques auxquels sont soumis les aimants permanents. On notera aussi que toujours dans un souci d'optimisation de l'encombrement de la pompe, seule la pluralité de bobine est redondée, et ce au plus près des aimants permanents.

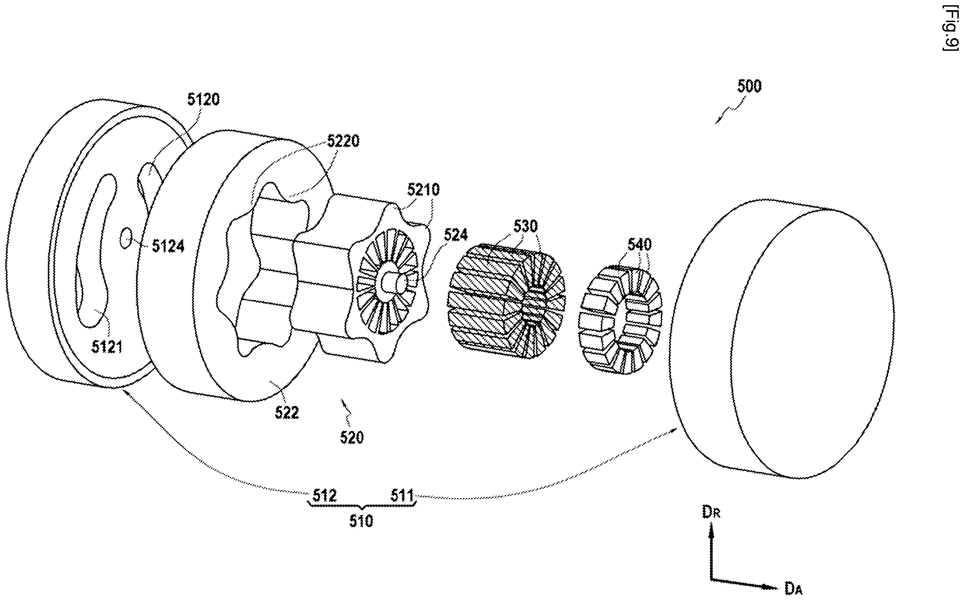

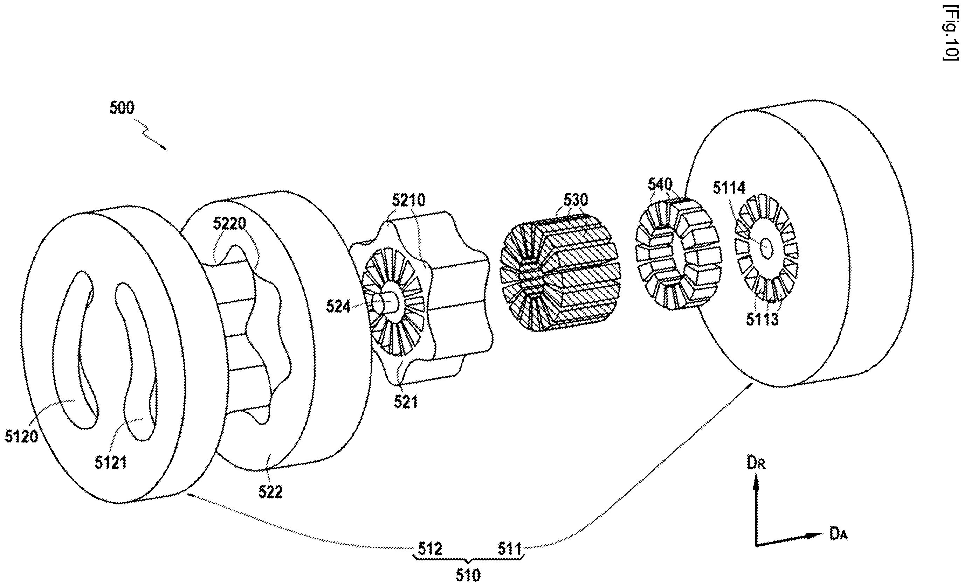

Les figures 9 et 10 illustrent un autre mode de réalisation d'une pompe électromagnétique 500 qui diffère de la pompe électromagnétique 300 décrite en relation avec les figures 5 et 6 en ce que les aimants permanents sont maintenus sur le pignon intérieur. Plus précisément, comme pour la pompe 300, la pompe 500 de type gérotor comprend un corps de pompe fixe ou stator 510 constitué d'un carter 511 et d'un flasque 512. Le carter 511 comporte des logements annulaires 5113. Le flasque 512 comporte un port d'aspiration 5120 et un port de refoulement 5121.

La pompe électromagnétique 500 comprend également un rotor 520 comprenant un pignon intérieur 521 et une couronne extérieure 522 présente autour du pignon intérieur 521 suivant une direction radiale D_{R}. Le pignon intérieur comprend une denture extérieure constituée ici de six dents 5210 tandis que la couronne extérieure 522 comprend une denture interne constituée ici de 7 dents 5220. Le pignon intérieur 521 comporte un arbre de rotation 524 destiné à être supporté par des paliers 5114 et 5124 présents respectivement sur le carter 511 et le flasque 512.

La pompe électromagnétique 500 comprend encore une pluralité d'aimants permanents 530 maintenus de manière annulaire dans le pignon intérieur 521 autour de l'arbre de rotation 524 et une pluralité de bobines 540 maintenues dans les logements annulaires 5113 présents dans le carter 511.

Une fois tous les éléments constitutifs de la pompe 500 assemblés, les bobines 540 se trouvent en vis-à-vis des aimants permanents 530 suivant une direction axiale D_{A}. De façon connue, le pilotage de la pompe électromagnétique 500 (couple et vitesse de rotation) est réalisé par contrôle du courant circulant dans les bobines.

En fixant les aimants permanents directement 530 sur le pignon intérieur 321, on intègre une partie des moyens d'entraînement de la pompe directement au sein des éléments en mouvement, ce qui permet d'obtenir un haut niveau d'intégration des moyens d'entraînement et donc un encombrement réduit pour la pompe.

En outre, en plaçant la pluralité d'aimants permanents et la pluralité de bobines en vis-à-vis suivant la direction axiale, on optimise grandement l'encombrement radial de la pompe. On obtient ainsi une pompe très compacte qui peut être pilotée de manière indépendante par rapport au régime moteur de la turbomachine avec laquelle elle est associée.

De même que pour les pompes décrites précédemment, la pompe électromagnétique 500 peut être équipée d'un double bobinage, à savoir comprendre des première et deuxième pluralités de bobines présentes respectivement d'un côté et de l'autre côté du pignon intérieur, les bobines des première et deuxième pluralités de bobines étant en vis-à-vis des aimants suivant la direction axiale.

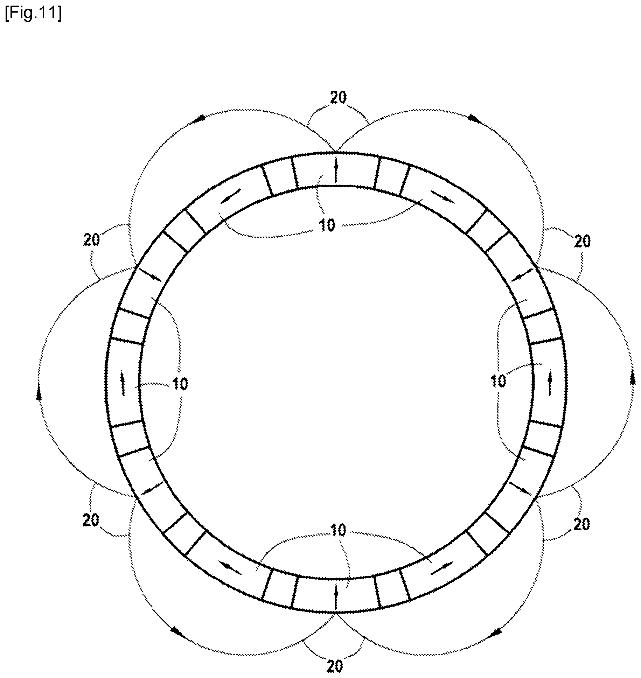

Selon une caractéristique additionnelle de l'invention, les aimants permanents présents sur l'anneau externe de la roue à aube pour les modes de réalisation décrits ci-avant en relation avec les figures 1 à 4, ou sur la couronne extérieure pour les modes de réalisation décrits ci-avant en relation avec les figures 5 à 8, ou sur le pignon intérieur pour le mode de réalisation décrit ci-avant en relation avec les figures 9 et 10, peuvent être disposés suivant une structure de Halbach. La figure 11 illustre un exemple de disposition des aimants permanents suivant une structure de Halbach. Dans cet exemple, des aimants permanents 10 sont répartis de manière annulaire comme dans les rotors décrits précédemment en inversant la polarité des aimants dans le sens radial et dans le sens circonférentiel comme représenté par les flèches indiquées sur la figure 11. Cette disposition particulière permet d'augmenter le champ magnétique 20 du côté externe du rotor tandis que le champ magnétique du côté interne du rotor est sensiblement annulé. On réduit ainsi la déperdition du champ magnétique, ce qui améliore le pilotage du rotor par les bobines.

La pompe électromagnétique selon l'invention peut être notamment utilisée pour alimenter en carburant ou en lubrifiant la turbomachine.

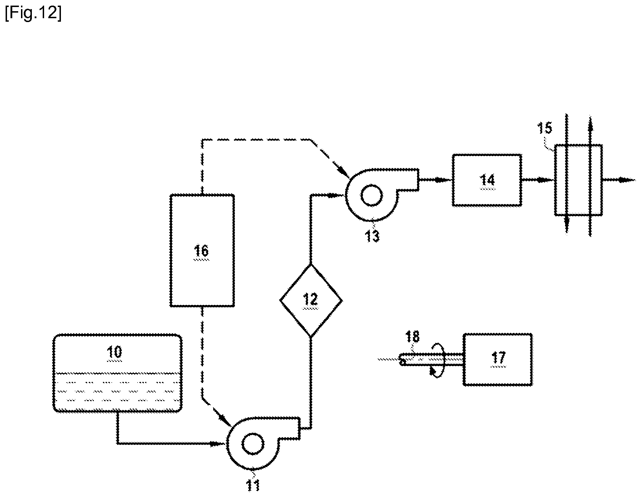

La figure 12 illustre un exemple de turbomachine qui comporte une ligne d'alimentation en carburant composée ici d'un réservoir de carburant 10, d'une pompe basse pression 11, d'un filtre 12, d'une pompe haute pression 13, d'un dispositif de dosage 14 et d'un échangeur de chaleur huile/carburant 15. La turbomachine comprend également une boîte d'accessoires 17 (« gear box ») à laquelle est relié un arbre moteur 18 destiné à délivrer une puissance mécanique dans la turbomachine. Conformément à l'invention, la pompe basse pression 11 et la pompe haute pression 13 sont constituées d'une pompe électromagnétique, par exemple du type à anneau liquide ou du type à canal latéral ou régénérative. La pompe basse pression 11 et la pompe haute pression 13 sont découplées mécaniquement de l'arbre moteur 18 et sont pilotées chacune de manière indépendante, par exemple le calculateur numérique 16 intégré au dispositif de pilotage de la turbomachine.

Concernant le circuit d'alimentation en huile d'une turbomachine, les pompes d'alimentation basse et/ou haute pression peuvent être également remplacées en partie ou en totalité par des pompes électromagnétiques pilotées indépendamment du régime moteur. Dans ce cas, on utilise de préférence mais non exclusivement des pompes de type gérotor.

## Revendications

1. Turbomachine comprenant un corps rotatif comprenant un arbre moteur délivrant une puissance mécanique, **caractérisée en ce qu'**elle comprend au moins une pompe électromagnétique (100) découplée mécaniquement de l'arbre moteur, chaque pompe électromagnétique comprenant au moins un stator (110) délimitant un volume interne annulaire dans lequel est présent un rotor (120) apte à entraîner un fluide, une pluralité d'aimants (130) répartis de manière annulaire sur le rotor (120) et au moins une pluralité de bobines (140) réparties de manière annulaire à l'intérieur du stator (110), les bobines de la pluralité de bobines (140) étant en vis-à-vis des aimants (130) suivant une direction axiale (D_{A}).

2. Turbomachine selon la revendication 1, dans laquelle le rotor (120) comprend une roue (121) munie d'une pluralité d'aubes (122), les aimants de la pluralité d'aimants (130) étant maintenus au niveau de la périphérie externe de la roue.

3. Turbomachine selon la revendication 2, dans laquelle chaque pompe électromagnétique (200) comprend des première et deuxième pluralités de bobines (240, 250) présentes respectivement d'un côté et de l'autre côté de la roue (221), les bobines des première et deuxième pluralités de bobines étant en vis-à-vis des aimants suivant la direction axiale.

4. Turbomachine selon la revendication 1, dans laquelle le rotor (320) comprend un pignon intérieur (321) coopérant avec une couronne extérieure (322) à denture intérieure, les aimants de la pluralité d'aimants (330) étant maintenus au niveau de la périphérie externe de la couronne extérieure.

5. Turbomachine selon la revendication 4, dans laquelle chaque pompe électromagnétique (400) comprend des première et deuxième pluralités de bobines (440, 450) présentes respectivement d'un côté et de l'autre côté de la couronne extérieure (422), les bobines des première et deuxième pluralités de bobines (440, 450) étant en vis-à-vis des aimants (430) suivant la direction axiale (D_{A}).

6. Turbomachine selon la revendication 1, dans laquelle le rotor (520) comprend un pignon intérieur (521) coopérant avec une couronne extérieure (522) à denture intérieure, les aimants de la pluralité d'aimants (530) étant maintenus sur le pignon intérieur (521).

7. Turbomachine selon la revendication 6, dans laquelle chaque pompe électromagnétique (500) comprend des première et deuxième pluralités de bobines présentes respectivement d'un côté et de l'autre côté du pignon (521), les bobines des première et deuxième pluralités de bobines étant en vis-à-vis des aimants suivant la direction axiale.

8. Turbomachine selon l'une quelconque des revendications 1 à 7, dans laquelle les aimants de la pluralité d'aimants (130) sont disposés de manière annulaire selon une structure de Halbach.

## Patentansprüche

1. Turbomaschine, umfassend einen Drehkörper, der eine Motorwelle umfasst, die eine mechanische Leistung bereitstellt, **dadurch gekennzeichnet, dass** sie mindestens eine von der Antriebswelle mechanisch entkoppelte elektromagnetische Pumpe (100) umfasst, wobei jede elektromagnetische Pumpe mindestens einen Stator (110), der ein ringförmiges Innenvolumen begrenzt, in welchem ein zum Mitführen von Fluid geeigneter Rotor (120) vorhanden ist, mehrere Magneten (130), die ringförmig um den Rotor (120) verteilt sind, und mindestens mehrere Spulen (140), die ringförmig im Inneren des Stators (110) verteilt sind, umfasst, wobei die Spulen der mehreren Spulen (140) den Magneten (130) in einer axialen Richtung (D_{A}) gegenüber liegen.

2. Turbomaschine nach Anspruch 1, wobei der Rotor (120) ein Rad (121) mit mehreren Schaufeln (122) umfasst, wobei die Magneten der mehreren Magneten (130) auf der Ebene des Außenumfangs des Rads gehalten werden.

3. Turbomaschine nach Anspruch 2, wobei jede elektromagnetische Pumpe (200) erste und zweite mehrere Spulen (240, 250) umfasst, die jeweils auf einer Seite und der anderen Seite des Rads (221) vorhanden sind, wobei die Spulen der ersten und zweiten mehreren Spulen den Magneten in der axialen Richtung gegenüber liegen.

4. Turbomaschine nach Anspruch 1, wobei der Rotor (320) ein Innenzahnrad (321) umfasst, das mit einem äußeren Ringteil (322) mit Innenverzahnung zusammenwirkt, wobei die Magneten der mehreren Magneten (330) auf der Ebene des Außenumfangs des äußeren Ringteils gehalten werden.

5. Turbomaschine nach Anspruch 4, wobei jede elektromagnetische Pumpe (400) erste und zweite mehrere Spulen (440, 450) umfasst, die jeweils auf einer Seite und der anderen Seite des äußeren Ringteils (422) vorhanden sind, wobei die Spulen der ersten und zweiten mehreren Spulen (440, 450) den Magneten (430) in der axialen Richtung (D_{A}) gegenüber liegen.

6. Turbomaschine nach Anspruch 1, wobei der Rotor (520) ein Innenzahnrad (521) umfasst, das mit einem äußeren Ringteil (522) mit Innenverzahnung zusammenwirkt, wobei die Magneten der mehreren Magneten (530) auf dem Innenzahnrad (521) gehalten werden.

7. Turbomaschine nach Anspruch 6, wobei jede elektromagnetische Pumpe (500) erste und zweite mehrere Spulen umfasst, die jeweils auf einer Seite und der anderen Seite des Zahnrads (521) vorhanden sind, wobei die Spulen der ersten und zweiten mehreren Spulen den Magneten in der axialen Richtung gegenüber liegen.

8. Turbomaschine nach einem der Ansprüche 1 bis 7, wobei die Magneten der mehreren Magneten (130) ringförmig gemäß einer Halbach-Struktur angeordnet sind.

## Claims

1. A turbomachine comprising a rotating spool comprising a drive shaft delivering mechanical power, **characterized in that** it comprises at least one electromagnetic pump (100) mechanically decoupled from the drive shaft, each electromagnetic pump comprising at least one stator (110) delimiting an annular internal volume wherein is present a rotor (120) able to drive a fluid, a plurality of magnets (130) distributed annularly on the rotor (120) and at least one plurality of coils (140) distributed annularly inside the stator (110), the coils of the plurality of coils (140) facing the magnets (130) along an axial direction (D_{A}).

2. The turbomachine according to claim 1, wherein the rotor (120) comprises a wheel (121) provided with a plurality of vanes (122), the magnets of the plurality of magnets (130) being held at the outer periphery of the wheel.

3. The turbomachine according to claim 2, wherein each electromagnetic pump (200) comprises first and second pluralities of coils (240, 250), present respectively on one side and on the other side of the wheel (221), the coils of the first and second pluralities of coils facing the magnets along the axial direction.

4. The turbomachine according to claim 1, wherein the rotor (320) comprises an inner gear (321) cooperating with an outer ring gear (322) with inner teeth, the magnets of the plurality of magnets (330) being held at the outer periphery of the outer ring gear.

5. The turbomachine according to claim 4, wherein each electromagnetic pump (400) comprises first and second pluralities of coils (440, 450), present respectively on one side and on the other side of the outer ring gear (422), the coils of the first and second pluralities of coils (440, 450) facing the magnets (430) along the axial direction (D_{A}).

6. The turbomachine according to claim 1, wherein the rotor (520) comprises an inner gear (521) cooperating with an outer ring gear (522) with inner teeth, the magnets of the plurality of magnets (530) being held on the inner gear (521).

7. The turbomachine according to claim 6, wherein each electromagnetic pump (500) comprises first and second pluralities of coils, present respectively on one side and on the other side of the gear (521), the coils of the first and second pluralities of coils facing the magnets along the axial direction.

8. The turbomachine according to any one of claims 1 to 7, wherein the magnets of the plurality of magnets (130) are arranged annularly in a Halbach structure.
